# EUROPEAN PATENT SPECIFICATION

(11) **EP 2 952 416 B1**
(45) Date of publication and mention of the grant of the patent: **04.03.2020**
(21) Application number: 14397519.1
(22) Date of filing: 04.06.2014
(51) Int. Cl.: B62D 25/20

(54) **Detachable flooring for a freight transportation chassis and methods for attaching and detaching such**
Abnehmbare Bodenplatten für einen Güterverkehrswagenrahmen und Verfahren zum Befestigen und Entfernen desselben
Plancher démontable pour châssis de transport de fret et procédés permettant de fixer et de détacher un tel plancher

(43) Date of publication of application: 09.12.2015
(73) Proprietor: UPM Plywood Oy, 15140 Lahti (FI)
(72) Inventor: Marttila, Pasi, 15540 Villähde (FI); Koponen, Simo, 15880 Hollola (FI)
(74) Representative: Berggren Oy, Tampere

(56) References cited:
- WO-A1-2011/157897

## Description

### Field of the Invention

The application relates to a detachable floor plate for a chassis of a freight transport vehicle or a trailer. Further the application relates to a method for attaching a detachable flooring and a method for detaching a detachable flooring.

### Background

Floorings for freight transport vehicles or trailers are normally made of various floor plates of wood-based material which are fixed next to each other or one after the other, to the frame beams of the frame of the freight transport vehicle or trailer. The wood-based floor plates used at present may be made of plywood board, solid wood board or wood-based composite boards. The wood-based floor plates may be coated with a suitable coating, like a plastic coating.

Flooring is currently often fixed by screws. However, this is often found time consuming due to number of screws and drill holes both during attaching and detaching phases. Also, screws penetrate the fixed flooring. Thus screws may have some direct or indirect effect on flooring durability and/or strength, for example.

WO 2011/157897 comprises attaching a plywood plate to a chassis frame via adhesive.

### Summary

An object of the invention is to provide a flooring system for a chassis of a freight transporting trailer, which flooring system is handy to attach to and detach from a chassis.

An embodiment of the invention comprises a plywood floor plate for a freight transport vehicle comprising a chassis frame. The plywood floor plate comprises veneers attached to each other. The plywood floor plate is attached to the chassis frame with an adhesive acrylic foam tape comprising two opposing adhesive surfaces. The adhesive tape may comprise a wound roll. Thickness of the material comprising adhesive may be determined.

An embodiment of the invention comprises a method for attaching a plywood floor plate for a freight transport vehicle comprising a chassis frame. The plywood floor plate comprises veneers attached to each other. The method comprises placing an adhesive acrylic foam tape comprising two opposing adhesive surfaces between the plywood floor plate and the chassis frame for attaching the plywood floor plate to the chassis frame via the adhesive tape. The adhesive tape is between the plywood floor plate and the chassis frame.

An embodiment of the invention comprises a method for detaching a plywood floor plate for a freight transport vehicle and a chassis frame for a freight transport vehicle. The plywood floor plate comprises veneers attached to each other. An adhesive acrylic foam tape which comprises two opposing adhesive surfaces between the plywood floor plate and the chassis frame enables keeping attached the plywood floor plate and the chassis frame at a distance from each other. The method for detaching comprises placing means for detaching in the adhesive tape between the plywood floor plate and the chassis frame. The method may comprise cutting the adhesive tape using means for detaching.

### Description of the Drawings

Some embodiments of the invention are illustrated in more detail by the appended drawings. The accompanied drawings are not in scale.
- Fig. 1: shows a side view of a freight transport vehicle comprising a chassis frame and floor plates according to an embodiment of the invention.
- Fig. 2a: shows placement of adhesive tape according to an embodiment.
- Fig. 2b: shows placement of adhesive tape according to an embodiment.
- Fig. 2c: shows placement of adhesive tape according to an embodiment.
- Fig. 3: shows an example of a frame of a freight transporting trailer according to an embodiment of the invention.
- Fig. 4: shows an example flooring of the freight transporting trailer according to an embodiment of the invention.
- Fig. 5: shows an example flooring of the freight transporting trailer according to an embodiment of the invention.
- Fig. 6: shows an example flooring of the freight transporting trailer according to an embodiment of the invention.
- Fig. 7: shows a method for attaching a floor plate to a chassis frame of the freight transporting trailer according to an embodiment of the invention.
- Fig. 8: shows a method for detaching a floor plate from a chassis frame of the freight transporting trailer according to an embodiment of the invention.

### Detailed Description of the Embodiments

The embodiments are described in further detail referring to the accompanying Figures.

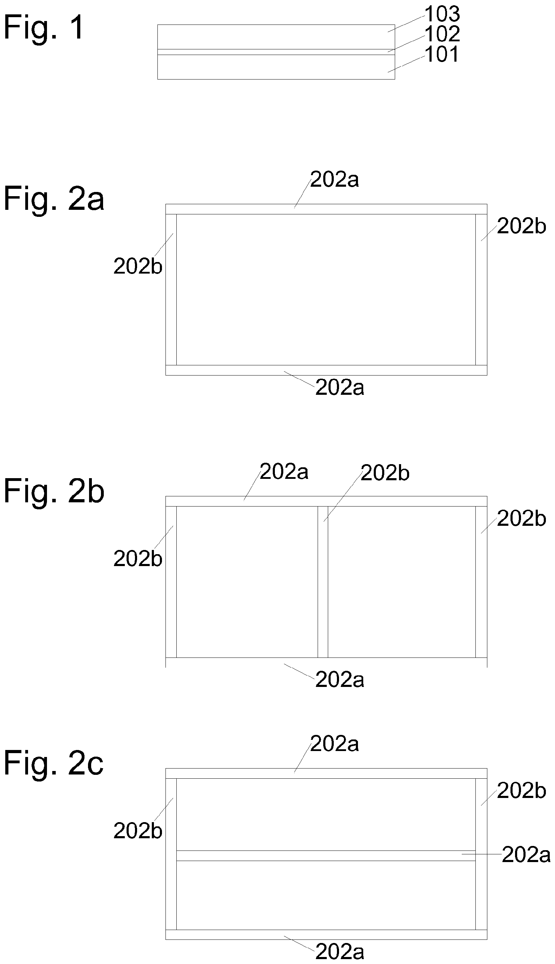

Figure 1 shows a side view of a chassis frame 101 of a freight transport vehicle and floor plates 103 according to an embodiment of the invention. A floor plate 103 is attached to the chassis frame 101 with an adhesive tape 102. The adhesive tape 102 is placed between the floor plate 103 and the chassis frame 101. Periphery edge parts of the floor plate 103 may be attached to the chassis frame 101 via the adhesive tape 102. A floor plate may be attached to a chassis frame via at least two parallel adhesive tape lines. The floor plate 103 may comprise adhesive tape 102 on its surface. The floor plate 103 may be placed towards chassis frame 101 such that the adhesive tape 102 is arranged to face a beam or a part of the chassis frame 101. Pressure may be supplied during the adhesive bonding. In response to the pressure, at least some parts of the adhesive tape 102 may flex slightly. Thickness of the adhesive tape 102 may be arranged to adjust distance between the chassis frame 101 and the floor plate 103 so that formed flooring comprises an even surface. The adhesive tape 102 is an acrylic foam tape and comprises elastic material. An elasticity coefficient may comprise 0.1 - 50-0 MPa, preferably 0.5 - 20.0 MPa, more preferably 0.9 - 2.0 MPa. In comparison, thicknesswise elasticity coefficient of a birch plywood may comprise 1000 MPa, which may be 500 - 1000 times more than that of the tape material. The adhesive tape may be shaped under pressure; while the plywood remains its dimensions. The amount of change of thickness of the adhesive tape due to elasticity may be from less than one to 20 per cents of the thickness of the adhesive tape 102. The adhesive tape comprises a thickness corresponding to a thickness of the adhesive tape. The adhesive tape may comprise some thickness, even during detachment. This may enable cutting so that cutting blade may be kept untouched with the chassis frame. This may enable good attachment and ease the detachment. The adhesive tape 102 enables forming an even adhesive layer between the chassis frame 101 and the floor plate 103. The even adhesive 102 layer forms a steady and stable attachment between the floor plate(s) 103 and the chassis frame 101. The attachment is resistant and persists hard use.

According to an embodiment an adhesive tape is placed between a floor plate and a chassis frame. The adhesive tape may be placed on the chassis frame portion. The adhesive tape is provided with two-sided adhesive surfaces for holding the floor plate(s) on a chassis frame according to embodiments. The chassis frame may be made of metal.

According to an embodiment an adhesive tape comprises pressure sensitive adhesive, self-adhesive surfaces, acryl foam, elastic material, rubber or soft plastic. The adhesive tape may comprise acryl foam. Density of adhesive tape material may comprise 500 - 1000 kg/m³. The adhesive tape comprises two opposing surfaces. The adhesive tape may comprise form of rectangular, elongated, rounded corners, oval, or any combination of previous, for example. The adhesive tape may comprise two opposing surfaces of same or different widths. Width of continuous surfaces may comprise 10 - 30 mm. Generally width of adhesive tape may be smaller than width of a chassis frame member/part on which it is placed for attaching the floor plate. The adhesive tape may comprise surface area facing the chassis frame, which is an order of 1/10 of the shorter side of the rectangular chassis frame. Width of adhesive tape may be selected according to implementation. Strength properties of adhesive tape, stresses caused on adhesive tape and/or form of a chassis frame parts may have effect on selection of the width of the adhesive tape. The adhesive tape may comprise width of the chassis frame part on which it may be placed. This may forbid water entering between the chassis frame and the plywood. The adhesive tape may comprise width which is less or more compared to the width of the corresponding chassis frame part.

Length of adhesive tape may correspond to the length of a side of a plywood flooring plate. Length of the adhesive tape line may correspond to length of a plywood flooring plate side length. The tape line may be constant or it may comprise cut areas. The adhesive tape may be cut or removed at placed, where tape is not suitable.

Thickness of an adhesive tape between the opposing surfaces is 1.5-5 mm; preferably 2-4 mm; more preferably 2-3.5 mm. The elastic adhesive tape may comprise modulus of elasticity of 0.2 - 20.0 MPa, preferably 0.5 - 10 MPa, more preferably 0.7 - 3.0 MPa. Higher values indicate a harder material. Elasticity may refer to ability to temporary change shape in response to pressure, but return to the original shape when pressure is removed.

Hardness of the adhesive tape according to an embodiment enables the adhesive tape to be used for maintaining a distance corresponding to thickness of the adhesive tape between the chassis frame and the floor plate. The adhesive tape has effect of providing good attachment and/or relatively even adhesive seam having thickness corresponding to the thickness of the adhesive tape.

The adhesive tape enables maintaining a certain space between the chassis frame and the floor plate. Thickness of the adhesive seam may comprise 1.0 - 6.0 mm, preferably 1.5 - 4.3 mm, for example over 2 mm, or preferably over 1.3 mm, more preferably over 1.4 mm. The adhesive seam may comprise one or more adhesive tape. For example two overlapping adhesive tapes may form an adhesive seam. Thickness of the adhesive seam may refer to the thickness of the adhesive tape or two or more overlapping adhesive tapes. The plywood floor plate may comprise variations in scale of millimetres. This may correspond to the thickness of the adhesive tape. The adhesive tape may compensate thickness variations of a plywood floor plate attached via it. The adhesive tape thickness may enable cutting, like sawing, the attached chassis frame and plywood floor plate and avoid touching the chassis frame with the cutting tool. According to embodiments the adhesive tape comprising even thickness provides strength for the adhesion. Adhesive tape may protect against cohesive failures. In accordance to at least some embodiments continuous adhesive tape provides tight continuous adhesive seam. This has effect of forming a moisture-resistant joint. Further an adhesive tape forms a durable joint and good attachment between a frame chassis and a floor plate. In at least some embodiments continuous adhesive tape is applied on floor plate(s). The applied adhesive tape is applied at least on edge parts of the of the floor plate, which are arranged to face the chassis frame.

A chassis frame part/member may comprise width of 10-20 cm, and adhesive tape may comprise width of 1-3 cm. The adhesive tape may be arranged to slightly adjust its form due to pressure, for example due to pressing the floor plate against the chassis frame. Generally, the adhesive tape remains narrow compared to the chassis frame even after the floor plate has been attached to the chassis frame with the adhesive tape. If broader adhesive tape is desired, for example for a wider chassis frame, two or more adhesive tapes may be applied adjacent to each other or on top of each other on a floor plate. The floor plate weight may cause the adhesive tape to adjust a bit. Thickness of the adhesive seam between the chassis frame and the floor plate is relatively even, still compensating possible local unevenness at the floor plate surface and/or chassis frame surface. The floor plate may be pressed in order to place it on a correct position and level. This may cause some adjusting in adhesive tape thickness in order to provide even surface layer of the formed flooring.

According to an embodiment a floor plate may comprise plywood board, chipboard, wood fibre board, composite or solid wood board. The floor plate may be made with or without a coating. A floor plate comprises a planar structure, where two opposing surfaces are at a distance from each other. The surfaces often form a rectangular, or other right-angled extending structure. The distance between the surfaces may be 5-50 mm, for example, whereas area of the surface is many times larger, for example 1-8 m², even up to 12-32 m². A floor plate according to at least some/all example embodiments comprise plywood, which comprises veneers attached to each other. The veneers may be manufactured using slicing or rotary cutting, for example. Veneers may be attached to each other using phenolic resin. In at least some embodiments a liquid phenolic resin is utilized in order to attach veneers of the plywood. Plywood comprising rotary cut veneers provides strong and stable plywood for a strength floor plate. An unbending floor plate enables adhesive tape of even thickness to be utilized during attachment of a floor plate; whereas a bent or weaker floor plate may cause more unevenness to the thickness of the adhesive tape for compensating unevenness of the attached parts. Plywood comprising veneers provides a rigid structure. This enables use of separate floor plates at a flooring. A continuous flooring is not required. Strength properties of the plywood may be predetermined and adjusted at the desired direction(s). In an embodiment at least one surface of the plywood is coated. Any coating suitable for a plywood is applicable. A coating may be attached using hot-pressing. In an embodiment at least one (upper) surface of the plywood is coated with phenolic resin layer. Phenolic resin may be impregnated to a member, like a paper, and hardened on top of a floor plate. Polyamide may be overlaid with polyamide. Polyamide may provide flexibility to the upper external layer. Alternatively a combination polyamide and phenolic resin may be provided in liquid form. The opposing surface of the plywood may be structured, or coated with another suitable coating. In an alternative embodiment both surfaces the plywood are coated with a phenolic resin layer. A phenolic resin surface has an effect of providing a good attachment via the adhesive tape.

Adhesive tape according to embodiments may be any suitable adhesive tape capable of forming a stable and sustainable adhesion between a floor plate and a chassis frame. The adhesive tape may comprise contact adhesive or pressure sensitive adhesive on both side of a soft foam sheet.

The adhesive may be resistant to moisture and/or maintain stable properties in a humid environment. Adhesive tape may have an effect of providing good attachment between the metal frame and the the plywood, as well as between the metal frame and the phenolic resin coating layer of the plywood. The metal frame and/or a part of it may comprise a painted or zinc coated or a galvanized external surface. The attachment surfaces of the transversal beams (cross-members) and the edge areas of the lower surfaces of the floor plates may be treated with primer prior adhering for increasing the adhesive force between these surfaces and the adhesive.

Figure 2a shows placement of adhesive tape according to an embodiment. An adhesive tape is placed on peripheral edge parts of the floor plate surface. Longitudinal edges of the floor plate comprise adhesive tape 202a. Transversal edges of the floor plate comprise adhesive tape 202b. The adhesive tape is arranged on one surface of the floor plate comprising two surfaces. An adhesive tape is placed along circumference of the floor plate according to the embodiment of the Figure 2a. Longitudinal (longer) side edges of the floor plate comprise adhesive tape 202a and the transversal (shorter) side edges of the floor plate comprise adhesive tape 202b.

Figures 2b and 2c show placement of adhesive tape according to an embodiment. An adhesive tape is placed along circumference of the floor plate as illustrated in the Figure 2a. In addition adhesive tape is provided on a floor plate surface areas, which are arranged to be attached to the chassis frame. The adhesive tape is placed onto at least some middle portion of the floor plate surface in embodiments of the Figures 2b and 2c. An additional transversal adhesive tape 202b is arranged between the transversal edges of the floor plate comprising adhesive tape 202b in the Figure 2b. An additional longitudinal adhesive tape 202a is arranged between the longitudinal edges of the floor plate comprising adhesive tape 202a in the Figure 2c.

Thickness of the adhesive tape in the attached construction is dependent on the used floor plate and its quality, for example. If a floor plate is warped or distorted, adhesive tape may compensate distortions of the floor plate and still achieve reliable adhering.

Properties and dimensions of used adhesive tape may depend on the used floor plate, its dimensions, material, elasticity, quality, hardness and/or density, for example. A floor plate with wide dimensions may require more adhesive tape lines along its surface compared to a floor plate with smaller dimensions. A floor plate with wide dimension(s) may have tendency to twist and/or warp. Materials and coatings have also effect on misalignments, expansion by heat and shrinkage, for example. Qualities and properties of floor plates may be compensated using continuous adhesive tape.

An adhesive tape between a floor plate and a chassis frame according to embodiments may enable using different floor plates. Floor plates need not be of uniform quality. For example, floor plates may comprise warps. Before attachment to a chassis according to embodiments, a floor plate may form a structure of U- or J-form, where the floor plate may comprise bent structure so that two opposing end edge portions are at a different level(s) than the mid portion of the floor plate. Alternatively, a floor plate may form a cup like structure, where edge and/or corner portions are on different level(s) than the middle portion of the floor plate. A floor plate may have different kind of bent structure, where the surface of the floor plate is not smooth or at the same level, but some evenness occurs. According to embodiment, different kind of floor plates may be utilized. Although adhesive tape may not require pressing in order to attach, in at least some embodiments the floor plate is pressed towards the adhesive tape and chassis frame. The adhesive tape comprises certain thickness despite the external press. Thus it is possible to press the floor plates towards the flexible adhesive tape in order to achieve continuous and durable adhesion. Further it is possible to utilize floor plates of nonuniform quality and still achieve a required quality for the end product. Adhesive tape enables durable adhesion even for uneven floor plates. For example, a floor plate has a rise in the middle, while end edges are facing adhesive tape. If an adhesive paste is used and amount of adhesive is modest, pressing the bent floor plate may result in pressing most of the adhesive away from edge portions. In this case the edge portions may be left with too modest amount, if any adhesive. Thus end edge portions of the floor plate may be left unattached. Whereas with the embodiments, the adhesive tape enables controlling the thickness of adhesive seam. Adhesive tape has certain flexibility and compressibility, but it still maintains certain thickness under pressure. The adhesive tape provides stability to the thickness of the adhesive seam. The floor plate is not in touch with the chassis frame, but there is always a continuous adhesive tape between them. Thus an even, continuous and durable adhesion is achieved with the adhesive tape according to embodiments.

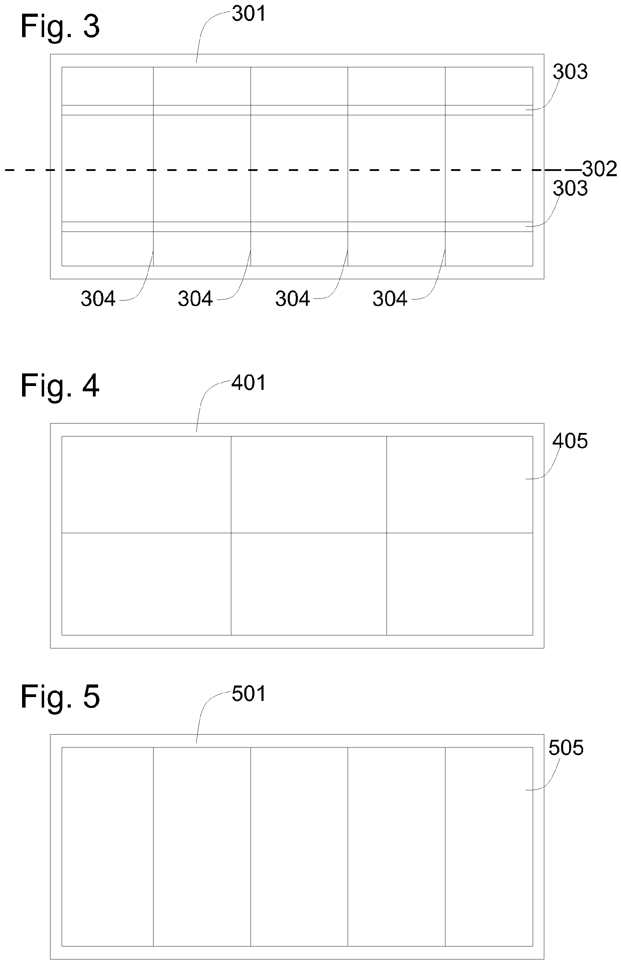

Figure 3 shows an example of a chassis frame of a freight transporting trailer according to an embodiment of the invention. The chassis frame comprises an edge profile 301, wherein vertical side walls of the trailer can be attached. The chassis frame comprises pair of longitudinal beams 303 and plurality of transversal beams 304. The transversal beams 304 are also called intermediate beams. The transversal beams 304 are attached perpendicularly to the longitudinal beams 303. The transversal beams 304 are within a certain distance from each other. The longitudinal beams 303 are situated to both sides of the longitudinal central line 302 of the trailer. The longitudinal beams are situated approximately halfway between the central line 302 and side edge profiles 301 parallel to the central line 302.

Profile of the transversal beams 304 vary. Also placement of the transversal beams 304 in relation to the edge profile 301 may vary in different frame structures. A transversal beam 304 may comprise I-profile. A transversal beam 304 may comprise U-profile with additional arms extending horizontally from the ends of the vertical branches of the U-profiles. According to another example, the transversal beam comprises a Z-profile. In yet another example, the profile of the transversal beam is formed of an omega-profile.

Any of the described transversal beams may be fixed to longitudinal frame beams 303 by welding them to the side surfaces of the vertical web plates of the longitudinal frame beams 303. The type of transversal beam used in certain location depends on the other constructional elements of the frame around that location. In some embodiments, the transversal beams 304 form a part of a flat surface for facing the flooring comprising floor plates.

The chassis frame in this application may be a frame, a chassis, a pallet, a platform or a stand, for example. The chassis frame may comprise metal beams. The chassis frame is used as a support during transporting freight or cargo. In this application a freight transport vehicle refers to a vehicle intended for the transportation of various bulk freight of solid material, for example a truck, a semi-trailer with a bolster-type truck, a full trailer hauled by a truck, a delivery van or pickup, or another similar vehicle or articulated vehicle which is known as such and moving on rubber-tired wheels, the vehicle and/or the trailer comprising a particular load space or body that is intended solely for the transportation of various freight or bulk freight of said kind. The term freight transport vehicle or trailer also covers such trains and cars moving on rails that are only intended for the transportations of freight and above-mentioned bulk freight. Furthermore, the term freight transport vehicle or trailer also covers, for example, various trailers to be hauled by a car, a van, a tractor, or a dune buggy. However, cars, tractors or dune buggies as such cannot be regarded as freight transport vehicles intended in this application.

According to an embodiment a transport chassis frame of a freight transport vehicle is provided. The chassis frame comprises an edge frame structure, which is forming the upmost surface level of the transport chassis. If edge or border portion of a floor plate surface is at a higher level (vertically) than the edge frame structure of the chassis frame, either the floor plate edge or border gets broken or the transportable goods/packages are violated due to uneven surface. The chassis frame comprises frame beams, and the floor plates are attached to the frame beams of the chassis frame with an adhesive tape. Adhesive tape is capable of adhering a metal frame and the floor plate tightly in order to sustain use, packing, transport, load, unpacking, and so on. Typically industrial trucks are used to load and unload items onto chassis frame floor plates. The adhesive seam between the flooring plates and frame beams comprises an adhesive tape. The surface of the transport chassis comprises the flooring plates and the edge frame structure. In at least some of the embodiments, difference in thickness of the chassis edge frame structure and longitudinal/transversal beams corresponds to the thickness of adhesive tape combined with a thickness of a floor plate. The chassis edge frame structure forms the upmost surface level, either equal with or upper than the surface made of the attached floor plates. In practice, chassis frame structures may comprise edge frame structure and frame beams having difference in levels of their upper surfaces less than required according to used adhesive tape and floor plates. In this case, it is possible to rise the edge frame of the chassis frame, and/or lower the frame beams in order to provide the desired difference in level. The exact difference in level depends on used adhesive tape and floor plates.

Figure 4 shows an example flooring of the freight transporting trailer according to an embodiment of the invention. The freight transporting trailer frame may be like the one described with Figure 3. Flooring of Figure 4 comprises plurality of floor plates 405. The floor plates 405 are attached one after another between the longitudinal beams 403 and transversal beams 304 of the frame of Figure 3. The floor plates 405 have rectangular form. Longitudinal edges of the rectangular floor plates 405 are against the longitudinal frame beams 303 and the longitudinal edge profile 301 of the frame. The transversal edge of the rectangular floor plates 405 is facing transversal edge of an adjacent floor plate. At the end portions of the frame, the transversal edge of the rectangular floor plate 405 is facing transversal edge profile 301 of the frame.

Figure 5 shows an example flooring of the freight transporting trailer according to an embodiment of the invention. The freight transporting trailer frame may be like the one described with Figure 3. Flooring of Figure 5 comprises plurality of rectangular floor plates 505. The floor plates 505 are attached next to each other so that longitudinal edge of the rectangular floor plates is facing a longitudinal edge of an adjacent floor plate. The longitudinal (longer) edge of the endmost rectangular floor plates 505 is facing the transversal (shorter) profile of the rectangular frame 301. The transversal (shorter) edges of the rectangular floor plates 505 are facing the longitudinal (longer) edge profile of the rectangular frame 301.

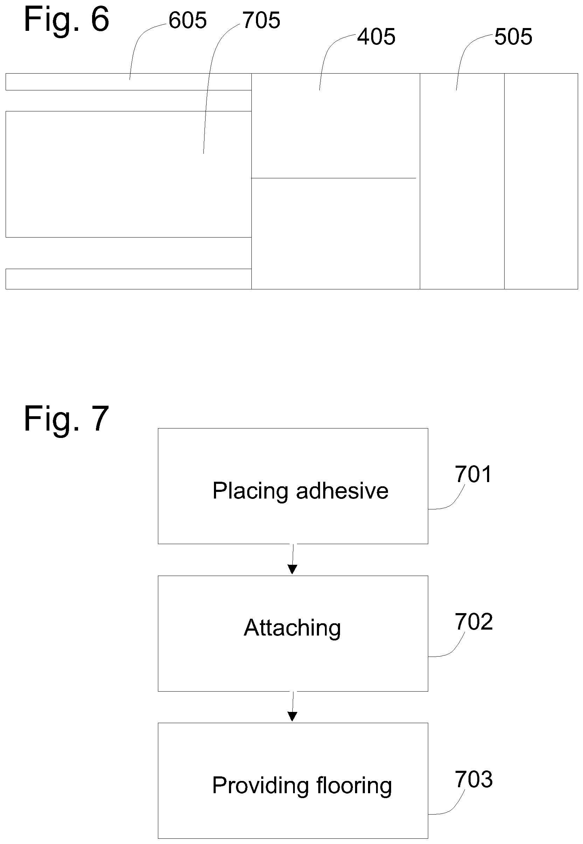

Figure 6 shows an example flooring of the freight transporting trailer according to an embodiment of the invention. Figure 6 comprises floor plates 505 oriented transversally in relation to the frame profile, as described with Figure 5. Figure 6 comprises floor plates 405 oriented longitudinally in relation to the frame profile, as described with Figure 4. Figure 6 comprises longitudinally elongated floor plates 705 between the longitudinal frame beams of the frame (303 in Figure 3). Figure 6 comprises floor plates 605 between the longitudinal edges of the frame profile (301 in Figure 3) and longitudinal frame beams (303 in Figure 3). Floor plates 705 are wider than floor plates 605.

The floor plates 405, 505, 605, 705 have been bonded to the transversal beams (304 in Figure 3). The floor plates 405 and 505 have been additionally bonded to longitudinal frame beams (303 in Figure 3). An embodiment may comprise different kind of flooring elements, as shown in Figure 6, one kind of flooring elements, as shown in Figures 4 or 5, or any mixture of these. For usability upper surface of flooring elements shall be at the same level, in other words flooring elements shall form a flat surface. In a side view an upward construction of Figures 4-6 shall have on the flooring surface as little as possible, if any, difference of height, level difference or unevenness at the surface. As is seen in Figures 4 and 5, the edge profile 301 of the frame is advantageously at the same level with the flooring.

The floor plates 405 are attached on the upper face side of the transversal beams 304. Adhesive tape is supplied onto the upper surface of the transversal beams 304 in order to attach the floor plate 405 onto the transversal beam.

According to an embodiment a method for attaching a floor plate for a freight transport vehicle comprises placing adhesive tape on the floor plate. In an embodiment, the method comprises placing the adhesive tape on proximity of corner areas of a floor plate. The adhesive is arranged to form relatively straight line between the chassis frame and the floor plate. Using adhesive tape according to at least some/all embodiments enables attaching the adhesive tape onto a surface of a floor plate at the manufacturing phase of the floor plate. Thus the floor plate with adhesive tape may be provided and/or transported for trailer manufacturer or maintenance. This avoids need to clean floor plate surface before placing adhesive on it. The adhesive tape may be placed and attached onto the floor plate by the floor plate manufacturer. This is not possible, if for example adhesive paste is used.

The method of Figure 7 comprises attaching a floor plate and a chassis frame according to an embodiment. The method comprises placing adhesive tape on a floor plate 701. The method comprises attaching 702 the floor plate to a chassis frame via the adhesive tape. In some embodiments, the attaching comprises further pressing the floor plate towards the floor plate and the adhesive for evenly attaching the floor plate to a chassis frame. The method may comprise pressing the floor plate against the chassis frame. During pressing the adhesive tape may adjust according to unevenness on floor plate or on chassis frame. The method comprises providing flooring 703. The flooring comprises certain distance between the floor plate and the chassis frame corresponding approximately to thickness of the adhesive tape.

According to an embodiment placing adhesive 701 is accomplished at the floor plate manufacturing phase. The adhesive tape may be placed onto surface of the floor plate at the floor plate manufacturer premises. The floor plate comprising adhesive tape may be transported to another place. The floor plate comprising adhesive tape may be stored and/or used later for chassis frame flooring. This has effect of less process steps at the chassis frame construction or maintenance phases. For example when replacing a floor plate with a new one, it is not necessary to clean floor plate surface in order to be ready to receive the adhesive. In addition, no adhesive or placing of it is required, when the replacing floor plate comprises adhesive tape according to embodiments. Time is saved during manufacturing and changing the flooring and/or separate steps of cleaning and/or placing adhesive are avoided.

Before assembling the floor plates according to embodiments, at first, the chassis frame may be cleaned with the help of suitable washing detergent (e.g. with the help of solvent based cleaning detergent and/or pressurized water). Preferably at least the upper surfaces of the intermediate beams being the attachment surfaces for the floor plates. Aim is to remove dirt and/or fattiness from these surfaces. If any water has been used, the frame must be dried prior placing and/or bonding of the floor plates. However, any cleaning may not be necessary if the attachment surfaces are already free from dirt after the previous manufacturing stages.

When suitable preprocessing for ensuring appropriate cleanliness has been performed, the upper surfaces of the frame beams, which are to be placed against edge parts of the lower surfaces of the floor plates, may be treated with a primer. This is done for ensuring the appropriate adhesion of the adhesive tape used for attachment of the floor plates. For example parts made of aluminum are pretreated before attaching floor plates onto the parts. After drainage of the primer, a floor plate comprising adhesive tape on it may be attached to the chassis frame. The placement of floor plate comprising self-adhering adhesive tape may be done, while the chassis frame is at a upright position during the attachment stage, or alternatively, while a chassis frame is at horizontal position during the attachment stage. Thickness of adhesive tape is suitable for forming steady adherence between the frame beams and the floor plates. Thickness of the adhesive tape is chosen in accordance to a position of the upper surfaces of the frame beams. The floor plates are placed one after another on to the frame beams such that for those floor plates, which are being between the longitudinal frame beams, the longitudinal edges are against inner edges of flanges of the longitudinal frame beams. For those floor plates being between the edge profiles and the frame beams, the inner longitudinal edges are against outer edges of flanges of the longitudinal frame beams and the outer longitudinal edges are against the inner side of the edge profiles. The transversal edges of the floor plates, except the front edges of the foremost row at front part of the frame and the rear edges of the rearmost row of floor plates at the rear part of the frame, are against each other. In this case the connection planes formed by two adjacent transversal sides of the floor plates are coplanar with the longitudinal center lines of the transversal beams being between the longitudinal frame beams and the side edge profiles. The front edges of the foremost row of the floor plates at front part of the frame are against the inner side of the transversal edge profile and the rear edges of the rearmost row of floor plates at the rear part of a trailer are against the inner side edges of the transversal edge profile, similarly as the longitudinal edges of the outer floor plates are against the inner side edges of the longitudinal side edge profiles.

For ensuring weather and/or water tightness of the flooring, some seal mass may be provided between the transversal edges of the adjacent floor plates, between the inner longitudinal edges of the floor plates, the outer side edges of the longitudinal frame beams, between the outer edges of the floor plates (i.e. those forming the side portions of the flooring) and/or the inner sides of the edge profiles. A plane of a floor plate is arranged next to a chassis frame. Sides of floor plates, between the two planes of the floor plates, may be arranged to be sealed via seal mass. A plane of a floor plate may comprise adhesive tape and a side of a floor plane may be sealed via seal mass.

The floor plates may be pressed against the adhesive tape and attachment surfaces of the frame beams. This may be desired in order to enable surfaces being bonded appropriately against each other. Further, pressing may enable adhesive tape to compress slightly in order to compensate possible unevenness of surfaces, and enable even flooring surface to be formed. Pressing can be carried out in various ways. There might be, for instance, suitable loading objects being placed on to the floor plates. There might be provided one loading object for each floor plate, or there might be some, or only one load that is laid on to the whole flooring. If common loading object for two or more floor plates is used there might be provided some elastic material between the loading object and the floor plates for ensuring that the load of the loading object distributes as evenly as possible to all floor plates, which are being pressed. Alternatively, pressing might be carried out mechanically by pressing the floor plates against the attachment surfaces of the frame beams with the help of hand-screw presses, adjustable clamps or hydraulically or pneumatically actuated pressing device or devices. Also when this kind of pressing is used, the even distribution of the load can be ensured by similar or corresponding means as described above. Adhesive tape according to embodiments has good adhesion and it typically adheres immediately. After that the adhesion is final having its maximum strength.

In case curing adhesive is used, after adequate curing of the adhesive has took place the loading objects or in case of mechanical pressing the pressing devices (if used) are removed after which the assembly of the flooring is complete. In some cases, it is desired to include some additional securing elements such as rivets, screws or bolts to the most critical places, for example to the corners of the floor plates. This may be desired, when the trailer is used for transporting such goods that may be very demanding in respect of the strength and durability of the flooring. For instance, in case when the trailer is used for transporting very heavy loads or objects being secured to the flooring with such attachment belts that are attached directly to the flooring, additional securing elements might be desired. The additional securing elements can be assembled preferably after the floor plates have been placed on the frame beams prior to pressing and curing stage. Although some screws might be needed for ensuring the strength and durability of the flooring in some quite unusual cases, the amount of material and work needed in those cases is still minimal when compared to the amount of work and material used in assembly of such prior art floorings which is secured to the frame beams of a trailer by means of screws or bolts only. Edge parts of the floor plates next to external rectangular chassis frame may be sealed separately, for example after the floor plates have been attached.

The flooring according to embodiments might be formed also differently as described in the above described embodiments. For instance, the attachment surfaces of floor plates can be, instead of the lower edge surfaces, the side surfaces of floor plates. In that case, the frame beams might be formed from profiles having vertical connection surfaces that can be used as the attachment surfaces of the floor plates. In some applications, it is also possible to use tongue-and-groove joints for connecting adjacent floor plates to each other. Further in some embodiments the sides of the floor plates can be cut out so that their shape conforms the shape of the sides of the beams to which they are bonded. Therefore there could be preferably such shapes in the beams that restrain the floor plates at least in one direction. This direction might be advantageously chosen such that it is the direction being the most critical direction in point of view of the strength of the adhesive tape i.e. it prevents more preferably tensile loads than those causing shearing forces to the adhesive attachments between the floor plates and the frame.

According to an embodiment there is provided a method for attaching a floor plate and a chassis frame of a freight transport vehicle. The embodiment is illustrated in the Figure 7. The adhesive tape is arranged on a floor plate 701. The adhesive tape may be placed on floor plate as a floor plate manufacturing phase. Adhesive tape is placed on peripheral edges of the floor plate. Additional lines of adhesive tape may be placed between the peripheral edges of the floor plate. Continuous lines of adhesive tape are arranged to be faced with a chassis frame. The floor plate is attached to the chassis frame via adhesive tape 702. The floor plate comprises adhesive tape, which are arranged to form the adhesive seam. The adhesive tape may be placed against chassis frame beams. Placing and attaching floor plate to the chassis frame may be implemented as a trailer manufacturing phase. Similar placing and attaching may be part of changing or replacing a floor plate. Several floor plates may be placed and attached to the chassis frame in order to provide a flooring 703. Flooring may comprise floor plates of similar of different dimensions. The amount of the floor plates used for forming a flooring may vary. The flooring may be comprise as many floor plates as there are open spaces between the longitudinal frame beams and transversal frame beams. In another embodiments one floor plate might cover two or more that kind of open spaces. The floor plates can be formed of plywood. Also other materials are possible, such as wood-based plate materials, for example composite or solid wood board. These floor plate materials may be coated with some suitable hard and durable material layers which can be phenolic resin layer or some other resin or plastic having corresponding durability and mechanical properties. The floor plate may have similar coating on both surfaces. Alternatively, upper surface of the floor plate, which forms the surface for the flooring, comprises another kind of coating, or is structured, for example according to wire or track. Lower surface of the floor plate, which is facing the adhesive tape, may be coated, for example with phenolic film.

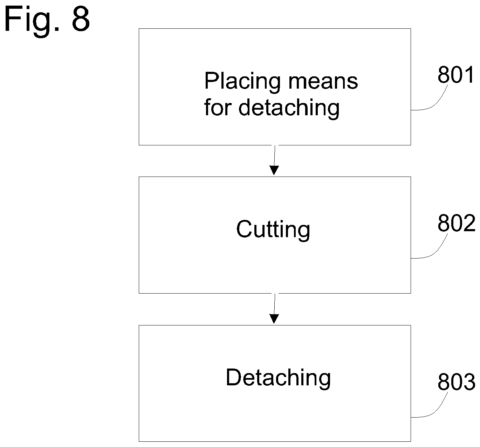

According to an embodiment there is provided a method for detaching a floor plate and a chassis frame of a freight transport vehicle. This embodiment is illustrated in the Figure 8. The floor plate and the chassis frame are attached via an adhesive tape. The adhesive tape is arranged to keep the attached floor plate and chassis frame at a certain distance from each other. The method of the Figure 8 comprises placing means for detaching 801 at the adhesive tape between the floor plate and the chassis frame. The method comprises cutting the adhesive seam 802 using means for detaching. Means for detaching may comprise a wire, a cutting wire, a piano wire, an oscillation tool, or other suitable tool. Means for detaching may comprise cutting edge of less than 3 mm; preferably less than 2 mm, or less than 1 mm. For example a blade of an oscillation tool may comprise a cutting edge of a blade of less than 2 mm. A wire of a detaching means may comprise diameter of less than 2 mm; or less than 1 mm. Before placing means for detaching, it is possible to make a space in the adhesive seam for the means for detaching. This may be implemented by cutting, drilling, milling or sawing. The adhesive tape according to embodiments provides a gap between the attached chassis frame and the floor plate. The chassis frame and the floor plate are not in touch. This enables cutting without harming the detaching means, the floor plate or the chassis frame. During the detaching, the placed detaching means are used for cutting the adhesive tape. For example a wire may be pulled through the adhesive tape. The means for detaching slice the adhesive tape. The adhesive tape may be cut into two parts so that it remains partly at surface of a frame beam, and partly at a surface of a floor plate. Thus the adhesive tape between the frame beam and a floor plate is cut. With a little amount of adhesive, for example a layer having thickness of less than 1 mm, it may not be in practice possible to cut the adhesive layer, but it is preferably removed using other methods and means. Adhesive tape according to embodiments enables effective cutting of adhesive in order to detach the floor plate and the chassis frame 803. In at least some embodiments, only adhesive remains on the chassis frame after a floor plate has been detached. Advantageously no wood-material or coating of the floor plate exists at the chassis frame after detachment.

An adhesive tape according to embodiments make it easy, fast and handy to detach the floor plates from the chassis frame. The adhesive tape is cuttable.

This is especially usable when period of exchange is dense. Some trailers are made for back loaded use, for example. In such trailers the rearmost floor plates will wear the most during use. Thus the rearmost floor plates require periodical changing. The exchange is fast and easy according to the embodiments.

A chassis frame according to an embodiment is welded. Some welding points exist at a metallic chassis frame. Welding points may comprise some unevenness of the chassis frame surface, which is arranged to be attached to a floor plate. For example, welding point may be seen as a rough area at a butt. Previously, when a floor plate was placed to be attached on a chassis frame, the floor plate was adjusted to compensate unevenness of the chassis frame. In practice floor plate was slit to form a cut-out facing the butt joint. If this was not done, the floor plate would carry the weight against the butt joint. This may cause violation to the surface of the floor plate facing the butt joint. With adhesive tape according to embodiments, compensation or cutting of the floor plate is no longer necessary. The adhesive tape forms a continuous adhesive seam along the chassis frame, between the chassis frame and the rectangular edge parts of the floor plate. The adhesive tape enables to compensate unevenness of surfaces. The thickness of elastic adhesive tape has effect of enabling compensating uneven surfaces. No hard parts are adjusted, but the thickness of adhesive tape may vary according to the space and thickness at the butt joint area, for example. Adhesive tape does not violate the floor plate. An adhesive tape may support two separate floor plates at their edge area. Correspondingly, a floor plate may comprise some local unevenness on its surface, which may be compensated with the adhesive tape according to embodiments.

Thickness of the adhesive tape may be chosen according to tolerance of the floor plate surface and/or thickness. Tolerance of thickness of the plywood floor plate may be 0.5-1.0 mm. Variations in the plywood plate thickness may depend on thickness of the plywood plate. For a thick plywood plate the tolerance of thickness may be over 1 mm. Metallic chassis frame may comprise approximately 1 mm difference from the even surface, for example at a welding point. The adhesive seam may comprise thickness of 1.0-6.0 mm. The adhesive tape may comprise thickness of over 1.1 mm; preferably over 1.3 mm; more preferably over 1.4 mm; most preferably over 2.0 mm. Tolerances of thickness of a plywood may be compensated utilizing an adhesive tape, or overlapping adhesive tapes.

An effect of adhesive tape according to embodiments comprises maintaining space or thickness between a chassis frame and a floor plate before the adhesive is cured or put on an adhesive state. An adhesive tape may comprise tight construction whereby a water tight joint is formed. An effect of an adhesive tape is to adhere a chassis frame and a floor plate to each other. An effect of a continuous adhesive tape is to provide a strength, tight adhesion between a metallic chassis frame and a floor plate, which may comprise plywood, coating, phenolic resin, or other suitable material on its surface facing the adhesive. Another effect of a continuous adhesive tape between a chassis frame and a floor plate is to provide at least a certain distance between the attached chassis frame and floor plate. Continuous adhesive tape having certain predetermined thickness enables handy, fast and easy way to detach a floor plate from a chassis frame.

Use of screws, as in prior art, may lead to loosen fixing due to unwinding of screw threads, or the screws may broke. Loosely fixed screw may cause failure to a floor plate or to a load. In case of a disrupted floor plate it may be necessary to flame-cut or mechanically cut the screw head. Thread portion remains in its place in floor plate and metal frame. In order to detach a floor plate, it has to be twisted by force. This may harm, for example cause twisting of metal frame parts. Twisted metal frame parts may hinder setting and attaching new floor plate(s). The unfixed metal frame may cause reduced working life for a floor plate. Twisted parts may cause additional stress to other parts.

The adhesive tape used for bonding the floor plates may comprise pressure sensitive adhesive. The adhesive tape may comprise acryl foam, one-component polyurethane adhesive or a two-component type adhesive, such as epoxy adhesive or two-component polyurethane adhesive.

The adhesive seam according to embodiments may provide strong, non-breakable, no self-breakable structure. The provided structure of freight flooring may be stiff and rigid. In addition, flooring may be easily detachable. The structure may provide effect of enabling use of cutting tool so that the cutting tool does not come into contact with the metal chassis frame. The structure may provide space for a cutting tool. This may avoid harming the cutting tool and/or the chassis frame.

Many other constructional parts and details of the flooring according to the embodiments, as well as method for forming such flooring can be carried out in ways differing from the above described examples, but being within the scope of the invention defined hereafter in the claims.

## Claims

1. A plywood floor plate for a freight transport vehicle comprising a chassis frame, **characterized in that** the plywood floor plate comprises veneers attached to each other, and the plywood floor plate is attached to the chassis frame via an adhesive acrylic foam tape, which comprises two opposing adhesive surfaces.

2. A plywood floor plate for a freight transport vehicle according to the claim 1, **characterized in that** the adhesive tape comprises thickness of at least 1.0 - 6.0 mm; preferably 1.1-5.2 mm; more preferably 1.5-2.6 mm between the two opposing surfaces.

3. A plywood floor plate for a freight transport vehicle according to any of the claims 1-2, **characterized in that** the plywood floor plate comprises a wood-base and a coating, wherein optionally the coating comprises an external layer of phenolic resin or polyamide.

4. A plywood floor plate for a freight transport vehicle according to any of the claims 1-3, **characterized in that** the chassis frame comprises metallic frame beams fastened to each other, wherein optionally the metallic frame comprises an external surface comprising paint or a zinc covering.

5. A plywood floor plate for a freight transport vehicle according to any of the claims 1-4, **characterized in that** the adhesive tape is placed onto a part of the chassis frame arranged to face a peripheral edge part of one surface of the plywood floor plate comprising two surfaces.

6. A plywood floor plate for a freight transport vehicle according to any of the claims 1-5, **characterized in that** the plywood floor plate is arranged to be attached to the chassis frame via at least two parallel adhesive tape lines.

7. A plywood floor plate for a freight transport vehicle according to any of the claims 1-6, **characterized in that** the plywood floor plate comprises veneers made via rotary cutting.

8. A plywood floor plate for a freight transport vehicle according to any of the claims 1-7, **characterized in that** side of a plywood floor plate attached to the chassis frame is arranged in contact with seal mass.

9. A method for attaching a plywood floor plate for a freight transport vehicle comprising a chassis frame, **characterized in that** the method comprises
- providing a plywood floor plate comprising veneers attached to each other;
- placing adhesive acrylic foam tape on the chassis frame part arranged to face the plywood floor plate;
- placing the plywood floor plate on the adhesive acrylic foam tape for attaching the plywood floor plate to the chassis frame
wherein the adhesive acrylic foam tape comprises two opposing adhesive surfaces.

10. A method according to claim 9, **characterized in that** the method comprises at least two parallel adhesive tape lines placed on the chassis frame parts arranged to face at least two opposing peripheral edge parts of the plywood floor plate

11. Method for detaching a plywood floor plate for a freight transport vehicle and a chassis frame for a freight transport vehicle, **characterized in that** the plywood floor plate comprises veneers attached to each other, and an adhesive acrylic foam tape, which comprises two opposing adhesive surfaces, between the plywood floor plate and the chassis frame, wherein the adhesive acrylic foam tape is arranged to keep the attached plywood floor plate and the chassis frame at a distance from each other, and the method for detaching comprises placing means for detaching in the adhesive acrylic foam tape between the plywood floor plate and the chassis frame.

12. The method according to the claim 11, wherein the means for detaching comprise cutting means, wherein the cutting means are arranged to penetrate the plywood floor plate and at least partly the adhesive tape.

13. The method according to any of the claims 11-12, wherein the plywood floor plate is cut in pieces before detaching the floor plate pieces.

14. The method according to any of the claims 11-13, wherein the method for detaching comprises cutting the adhesive tape.

15. Method according to any of the claims 11-14, **characterized in that** the means for detaching comprise cutting means of less than 3 mm; or preferably less than 2 mm; or more preferably less than 1 mm.

## Patentansprüche

1. Sperrholzbodenplatte für ein Gütertransportfahrzeug, umfassend einen Chassisrahmen, **dadurch gekennzeichnet, dass** die Sperrholzbodenplatte aneinander angebrachte Furniere umfasst und die Sperrholzbodenplatte an dem Chassisrahmen mittels eines Akrylschaumklebebandes befestigt ist, das zwei entgegengesetzte Klebeflächen umfasst.

2. Sperrholzbodenplatte für ein Gütertransportfahrzeug nach Anspruch 1, **dadurch gekennzeichnet, dass** das Klebeband eine Dicke von mindestens 1,0-6,0 mm, bevorzugt 1,1-5,2 mm und besonders bevorzugt 1,5-2,6 mm, zwischen den zwei entgegengesetzten Klebeflächen umfasst.

3. Sperrholzbodenplatte für ein Gütertransportfahrzeug nach einem der Ansprüche 1-2, **dadurch gekennzeichnet, dass** die Sperrholzbodenplatte einen Holzbasiswerkstoff und eine Beschichtung umfasst, wobei optional die Beschichtung eine äußere Schicht aus Phenolharz oder Polyamid umfasst.

4. Sperrholzbodenplatte für ein Gütertransportfahrzeug nach einem der Ansprüche 1-3, **dadurch gekennzeichnet, dass** der Chassisrahmen aneinander befestigte metallische Rahmenträger umfasst, wobei optional der metallische Rahmen eine Außenoberfläche mit einer Lackierung oder einem Zinküberzug umfasst.

5. Sperrholzbodenplatte für ein Gütertransportfahrzeug nach einem der Ansprüche 1-4, **dadurch gekennzeichnet, dass** das Klebeband auf einem Abschnitt des Chassisrahmens platziert wird, der angeordnet ist, um zu einem Umfangskantenabschnitt von einer Fläche der Sperrholzbodenplatte, die zwei Flächen umfasst, gerichtet zu sein.

6. Sperrholzbodenplatte für ein Gütertransportfahrzeug nach einem der Ansprüche 1-5, **dadurch gekennzeichnet, dass** die Sperrholzbodenplatte angeordnet ist, um am Chassisrahmen durch mindestens zwei parallele Klebebandlinien befestigt zu werden.

7. Sperrholzbodenplatte für ein Gütertransportfahrzeug nach einem der Ansprüche 1-6, **dadurch gekennzeichnet, dass** die Sperrholzbodenplatte durch Rundschälen hergestellte Furniere umfasst.

8. Sperrholzbodenplatte für ein Gütertransportfahrzeug nach einem der Ansprüche 1-7, **dadurch gekennzeichnet, dass** eine Seite einer am Chassisrahmen befestigten Sperrholzbodenplatte in Kontakt mit einer Dichtstoffmasse angeordnet ist.

9. Verfahren zum Befestigen einer Sperrholzbodenplatte für ein Gütertransportfahrzeug, umfassend einen Chassisrahmen, **dadurch gekennzeichnet, dass** das Verfahren Folgendes umfasst:
- Bereitstellen einer Sperrholzbodenplatte, die aneinander angebrachte Furniere umfasst;
- Platzieren des Akrylschaumklebebandes auf dem Chassisrahmenabschnitt, der angeordnet ist, um zur Sperrholzbodenplatte gerichtet zu sein;
- Platzieren der Sperrholzbodenplatte auf dem Akrylschaumklebeband, um die Sperrholzbodenplatte am Chassisrahmen zu befestigen,
wobei das Akrylschaumklebeband zwei entgegengesetzte Klebeflächen umfasst.

10. Verfahren nach Anspruch 9, **dadurch gekennzeichnet, dass** das Verfahren mindestens zwei parallele Klebebandlinien umfasst, die auf den Chassisrahmenabschnitten platziert sind, die angeordnet sind, um zu mindestens zwei entgegengesetzten Umfangskantenabschnitten der Sperrholzbodenplatte gerichtet zu sein.

11. Verfahren zum Demontieren einer Sperrholzbodenplatte für ein Gütertransportfahrzeug und eines Chassisrahmens für ein Gütertransportfahrzeug, **dadurch gekennzeichnet, dass** die Sperrholzbodenplatte aneinander angebrachte Furniere sowie ein Akrylschaumklebeband, das zwei entgegengesetzte Klebeflächen aufweist, zwischen der Sperrholzbodenplatte und dem Chassisrahmen umfasst, wobei das Akrylschaumklebeband dazu angeordnet ist, die befestigte Sperrholzbodenplatte und den Chassisrahmen in einem Abstand voneinander zu halten und das Verfahren zum Demontieren das Platzieren von Demontiermitteln im Akrylschaumklebeband zwischen der Sperrholzbodenplatte und dem Chassisrahmen umfasst.

12. Verfahren nach Anspruch 11, wobei die Demontiermittel Schneidmittel umfassen und die Schneidmittel dazu angeordnet sind, die Sperrholzbodenplatte und mindestens teilweise das Klebeband zu durchdringen.

13. Verfahren nach einem der Ansprüche 11-12, wobei vor dem Demontieren der Bodenplattenstücke die Sperrholzbodenplatte in Stücke geschnitten wird.

14. Verfahren nach einem der Ansprüche 11-13, wobei das Verfahren zum Demontieren das Schneiden des Klebebandes umfasst.

15. Verfahren nach einem der Ansprüche 11-14, **dadurch gekennzeichnet, dass** die Demontiermittel Schneidmittel von kleiner als 3 mm, oder bevorzugt kleiner als 2 mm oder besonders bevorzugt kleiner als 1 mm, umfassen.

## Revendications

1. Plaque de plancher en contreplaqué pour véhicule de transport de fret comprenant un cadre de châssis, **caractérisée en ce que** la plaque de plancher en contreplaqué comprend des feuilles de placage reliées les unes aux autres et la plaque de plancher en contreplaqué est fixée au cadre de châssis par le biais d'un ruban adhésif en mousse acrylique qui comporte deux surfaces adhésives opposées.

2. Plaque de plancher en contreplaqué pour véhicule de transport de fret selon la revendication 1, **caractérisée en ce que** le ruban adhésif a une épaisseur d'au moins 1,0 - 6,0 mm, de préférence 1,1 - 5,2mm, plus préférablement 1,5 - 2,6 mm entre les deux surfaces opposées.

3. Plaque de plancher en contreplaqué pour véhicule de transport de fret selon l'une quelconque des revendications 1-2, **caractérisée en ce que** la plaque de plancher en contreplaqué comprend une base en bois et un revêtement, le revêtement comprenant, facultativement, une couche extérieure de résine phénolique ou de polyamide.

4. Plaque de plancher en contreplaqué pour véhicule de transport de fret selon l'une quelconque des revendications 1-3, **caractérisée en ce que** le cadre de châssis comprend des poutrelles de châssis métalliques liées les unes aux autres, le châssis métallique comportant, facultativement, une surface extérieure pourvue d'un revêtement de peinture ou de zinc.

5. Plaque de plancher en contreplaqué pour véhicule de transport de fret selon l'une quelconque des revendications 1-4, **caractérisée en ce que** le ruban adhésif est placé sur une partie du cadre de châssis destinée à faire face à une partie de bord périphérique d'une surface de la plaque de plancher en contreplaqué comportant deux surfaces.

6. Plaque de plancher en contreplaqué pour véhicule de transport de fret selon l'une quelconque des revendications 1-5, **caractérisée en ce que** la plaque de plancher en contreplaqué est destinée à être fixée au cadre de châssis par le biais d'au moins deux lignes de ruban adhésif parallèles.

7. Plaque de plancher en contreplaqué pour véhicule de transport de fret selon l'une quelconque des revendications 1-6, **caractérisée en ce que** la plaque de plancher en contreplaqué comprend des feuilles de placage obtenues par déroulage.

8. Plaque de plancher en contreplaqué pour véhicule de transport de fret selon l'une quelconque des revendications 1-7, **caractérisée en ce qu'**un côté d'une plaque de plancher en contreplaqué fixée au châssis est mis en contact avec un produit d'étanchéité.

9. Procédé de fixation d'une plaque de plancher en contreplaqué pour véhicule de transport de fret comprenant un cadre de châssis, **caractérisé en ce que** le procédé comprend :
- prendre une plaque de plancher en contreplaqué comprenant des feuilles de placage reliées les unes aux autres,
- placer un ruban adhésif en mousse acrylique sur la partie du cadre de châssis destinée à faire face à la plaque de plancher en contreplaqué ;
- placer la plaque de plancher en contreplaqué sur le ruban adhésif en mousse acrylique pour fixer la plaque de plancher en contreplaqué au cadre de châssis,
le ruban adhésif en mousse acrylique comportant deux surfaces adhésives opposées.

10. Procédé selon la revendication 9, **caractérisé en ce que** le procédé comprend au moins deux lignes de ruban adhésif parallèles placées sur les parties du cadre de châssis destinées à faire face à au moins deux parties de bord périphérique opposées de la plaque de plancher en contreplaqué.

11. Procédé de démontage d'une plaque de plancher en contreplaqué pour véhicule de transport de fret et d'un cadre de châssis pour véhicule de transport de fret, **caractérisé en ce que** la plaque de plancher en contreplaqué comprend des feuilles de placage reliées les unes aux autres et un ruban adhésif en mousse acrylique, qui comporte deux surfaces adhésives opposées, entre la plaque de plancher en contreplaqué et le cadre de châssis, le ruban adhésif en mousse acrylique étant conçu pour maintenir la plaque de plancher en contreplaqué fixée et le cadre de châssis à une distance l'un de l'autre, et le procédé de démontage comprend la mise en place d'un moyen de démontage dans le ruban adhésif en mousse acrylique entre la plaque de plancher en contreplaqué et le cadre de châssis.

12. Procédé selon la revendication 11, dans lequel le moyen de démontage comprend un moyen coupant, le moyen coupant étant conçu pour pénétrer la plaque de plancher en contreplaqué et au moins en partie le ruban adhésif.

13. Procédé selon l'une quelconque des revendications 11-12, dans lequel la plaque de plancher en contreplaqué est coupée en morceaux avant de démonter les morceaux de plaque de plancher.

14. Procédé selon l'une quelconque des revendications 11-13, dans lequel le procédé de démontage consiste à couper le ruban adhésif.

15. Procédé selon l'une quelconque des revendications 11-14, **caractérisé en ce que** le moyen de démontage comprend un moyen coupant de moins de 3 mm, ou de préférence moins de 2 mm, ou plus préférablement moins de 1 mm.
